# EUROPEAN PATENT APPLICATION

(11) **EP 4 692 607 A1**
(43) Date of publication of application: **11.02.2026**
(21) Application number: 24788009.9
(22) Date of filing: 07.04.2024
(51) Int. Cl.: F16K 1/36

(54) **VALVE ASSEMBLY AND ELECTRONIC EXPANSION VALVE**

(30) Priority: 14.04.2023 CN 202310419992; 14.04.2023 CN 202310420752; 14.04.2023 CN 202320880267 U; 14.04.2023 CN 202320836920 U
(71) Applicant: Zhejiang Dunan Artificial Environment Co., Ltd., Shaoxing Zhejiang 311835 (CN)
(72) Inventor: YANG, Zhongyu, Shaoxing, Zhejiang 311835 (CN); JIN, Ju, Shaoxing, Zhejiang 311835 (CN); WANG, Fugang, Shaoxing, Zhejiang 311835 (CN)
(74) Representative: Hindles Limited
(86) International application number: PCT/CN2024/086463
(87) International publication number: WO 2024/212906

(57) **Abstract**

Provided is a valve assembly. The valve assembly includes a valve seat assembly (100), a valve needle assembly (200), and a sealing structure (300), where an end of the valve seat assembly (100) is provided with a valve port (101); an inner circle of the sealing structure (300) becomes a sealing ring line in sealing fit with the valve needle assembly (200), or an outer circle of the sealing structure (300) becomes a sealing ring line in sealing fit with the valve seat assembly (100); and a diameter of the sealing ring line is less than a maximum diameter of an annular sealing portion (108) between the valve needle assembly (200) and the valve port (101), and at a position between the sealing ring line and the annular sealing portion, an action force of a fluid in the valve seat assembly on a side surface of the valve needle assembly is towards the valve port, and the fluid exerts an action force towards the valve port on the valve needle assembly. In this way, an impact force on an end portion of the valve needle assembly when a valve is opened is reduced, impact of the fluid on the end portion of the valve needle assembly is weakened, stability when the valve is opened is improved, and stability of flow change is improved. An electronic expansion valve using the valve assembly is further provided.

## Description

The present invention claims the priority to Patent Application No. 2023104199920 filed with the Chinese Patent Office on April 14, 2023 and entitled "Valve Assembly and Electronic Expansion Valve"; the present invention claims the priority to Patent Application No. 2023104207522 filed with the Chinese Patent Office on April 14, 2023 and entitled "Valve Assembly and Electronic Expansion Valve"; the present invention claims the priority to Patent Application No. 2023208802679 filed with the Chinese Patent Office on April 14, 2023 and entitled "Valve Assembly and Electronic Expansion Valve"; and the present invention claims the priority to Patent Application No. 2023208369201 filed with the Chinese Patent Office on April 14, 2023 and entitled "Valve Assembly and Electronic Expansion Valve".

### Technical Field

The present invention relates to the technical field of valve assemblies, and in particular, to a valve assembly and an electronic expansion valve.

### Background

In a valve seat assembly of a valve assembly, a valve port is opened and closed through a reciprocating valve needle assembly. In a case where the valve port is throttled at small opening, a high-pressure airflow at an inlet end of the valve assembly cannot be converted into a low-pressure airflow at an outflow end within a short time. The high-pressure airflow impacts an end portion of the valve needle assembly, and subjects the entire valve needle assembly to great dynamic gas force in a direction away from the valve port. As a result, the valve needle assembly is lifted up by the great dynamic gas force, and cannot close the valve port, and the entire valve assembly can no longer be used. In view of that, it is necessary to optimize the existing valve assembly for solving a problem that the valve needle assembly cannot close the valve port.

### Summary

The present invention provides a valve assembly and an electronic expansion valve for solving a problem that a fluid impacts a valve needle assembly when a valve is opened and improving stability when the valve is opened.

In order to solve the problem, according to one aspect of the present invention, the present invention provides a valve assembly. The valve assembly includes: a valve seat assembly, where an end of the valve seat assembly is provided with a valve port; a valve needle assembly movably arranged in the valve seat assembly, so as to open and close the valve port, where an annular sealing circle annular sealing portion is formed at a position where the valve needle assembly is in contact with the valve port; and a sealing structure located between the valve seat assembly and the valve needle assembly, where the valve needle assembly is in sealing fit with the valve seat assembly through the sealing structure; and an inner wall of the valve seat assembly is provided with an annular recess, the sealing structure is located in the annular recess, and an inner diameter of the sealing structure is less than a maximum diameter of the annular sealing circle annular sealing portion; or an outer wall of the valve needle assembly is provided with an annular recess, the sealing structure is located in the annular recess, and an outer diameter of the sealing structure is less than a maximum diameter of the annular sealing circle annular sealing portion.

Further, in a case where the inner wall of the valve seat assembly is provided with the annular recess, the sealing structure includes a sealing circle and a sealing ring, the sealing circle is arranged around the sealing ring, the valve needle assembly passes through the sealing ring, and the sealing circle exerts elastic pre-tightening force towards the valve needle assembly on the sealing ring.

Further, in a case where the inner wall of the valve seat assembly is provided with the annular recess, the valve seat assembly includes a bonnet, a protective sleeve, and a valve core seat that are connected in sequence, the annular recess is located between the bonnet and the protective sleeve, the valve core seat is provided with the valve port, and the valve needle assembly passes through the protective sleeve.

Further, a plurality of circulation holes are distributed in a circumferential direction of the valve core seat, and in a case where the valve port is opened, the valve port communicates with the plurality of circulation holes.

Further, the valve needle assembly includes a large valve needle, a small valve needle, and a soft sealing gasket; the large valve needle is in sealing fit with the valve seat assembly through the sealing structure, and the large valve needle is fixedly connected to the small valve needle; and the soft sealing gasket is sandwiched between the large valve needle and the small valve needle, and the soft sealing gasket is in sealing fit with the valve port.

Or, the valve seat assembly includes a valve core seat, a sealing member, and a limit ring; the sealing member is provided with the valve port, and the sealing member is located in a recess of the valve core seat; and the limit ring is fixed in the recess of the valve core seat, and the limit ring limits a position of the sealing member.

Further, the valve assembly includes a screw assembly, a nut assembly, and a valve tube, where the screw assembly is in drive connection to an end of the valve needle assembly, and the nut assembly and the valve tube are fixedly connected to the valve seat assembly; the nut assembly is located in the valve tube, and the nut assembly is in threaded connection to the screw assembly; and the valve assembly further includes a balance channel, and a cavity between the nut assembly and the valve tube communicates with the valve port through the balance channel.

Further, the valve needle assembly is provided with a first channel penetrating axially, and the screw assembly is provided with a second channel; a third channel is provided in the bonnet valve seat assembly, or a gap between the bonnet valve seat assembly and the screw assembly forms a third channel; and the nut assembly is provided with a fourth channel, and the first channel, the second channel, the third channel, and the fourth channel communicate with each other in sequence to form the balance channel.

Further, a plurality of circulation holes are distributed in a circumferential direction of the valve core seat, and in a case where the valve port is opened, the valve port communicates with the plurality of circulation holes.

Further, the valve needle assembly includes a large valve needle, a small valve needle, and a sealing gasket; the large valve needle is in sealing fit with the valve seat assembly through the sealing structure, and the large valve needle is fixedly connected to the small valve needle; and the sealing gasket is sandwiched between the large valve needle and the small valve needle, and the sealing gasket is in sealing fit with the valve port.

Further, the valve seat assembly includes a valve core seat, a sealing member, and a limit ring; the sealing member is provided with the valve port, and the sealing member is located in a recess of the valve core seat; and the limit ring is fixed in the recess of the valve core seat, and the limit ring limits a position of the sealing member.

According to another aspect of the present invention, an electronic expansion valve is provided. The electronic expansion includes a mounting seat and the valve assembly described above, where a portion of the valve seat assembly of the valve assembly extends into the mounting seat and is fixedly connected to the mounting seat.

Further, an outer wall of the valve seat assembly is in threaded connection to an inner wall of the mounting seat, and step structures in mutual limiting fit are arranged between the mounting seat and the valve seat assembly. The electronic expansion valve further includes an annular sealing gasket, and the annular sealing gasket is sandwiched between the step structures between the mounting seat and the valve seat assembly.

By applying a technical solution of the present invention, the valve assembly is provided. The valve assembly includes: the valve seat assembly, the valve needle assembly, and the sealing structure. The end of the valve seat assembly is provided with the valve port. The valve needle assembly movably arranged in the valve seat assembly, so as to open and close the valve port, and the annular sealing portion is formed at the position where the valve needle assembly is in contact with the valve port. The sealing structure is located between the valve seat assembly and the valve needle assembly, and the valve needle assembly is in sealing fit with the valve seat assembly through the sealing structure. The inner wall of the valve seat assembly is provided with the annular recess, the sealing structure is located in the annular recess, and the inner diameter of the sealing structure is less than the diameter of the annular sealing portion; or the outer wall of the valve needle assembly is provided with the annular recess, the sealing structure is located in the annular recess, and the outer diameter of the sealing structure is less than the maximum diameter of the annular sealing portion. In this solution, according to different positions of the annular recess, the sealing structure has two different arrangement positions. An inner circle of the sealing structure becomes a sealing ring line in sealing fit with the valve needle assembly, or an outer circle of the sealing structure becomes a sealing ring line in sealing fit with the valve seat assembly. In either case, a diameter of the sealing ring line is less than the maximum diameter of the annular sealing portion between the valve needle assembly and the valve port. Through the arrangement, at a position between the sealing ring line and the annular sealing portion, an action force of a fluid in the valve seat assembly on a side surface of the valve needle assembly is towards the valve port, that is, the fluid exerts an action force towards the valve port on the valve needle assembly. The action force counteracts part of the action force on an end portion of the valve needle assembly exerted by the fluid from an inlet. Thus, dynamic gas force on the entire valve needle assembly is reduced, and it guarantees that the valve needle assembly can successfully close the valve port.

### Brief Description of the Drawings

As a constituent part of the present invention, the drawings of the description are used to provide further understanding of the present invention, and exemplary embodiments of the present invention and their specification serve to explain the present invention, and do not constitute improper limitation to the present invention. In the figures:
Fig. 1 shows a schematic structural diagram of a valve assembly according to Embodiment 1 of the present invention;
Fig. 2 shows a schematic diagram of a partial structure of Fig. 1;
Fig. 3 shows a partial enlarged view of Fig. 2;
Fig. 4 shows another schematic diagram of the partial structure of Fig. 1;
Fig. 5 shows a partial enlarged view of Fig. 4;
Fig. 6 shows a schematic structural diagram of a valve assembly according to Embodiment 2 of the present invention; and
Fig. 7 shows a schematic structural diagram of an electronic expansion valve according to Embodiment of the present invention.

The accompanying drawings include the following reference numerals:
100. valve seat assembly; 101. valve port; 102. circulation hole; 103. annular recess; 104. guide sleeve; 105. cambered surface; 106. straight cylindrical surface; 107. flow guide surface; 108. annular sealing portion; 110. valve core seat; 120. protective sleeve; 121. sleeve body; 122. connector; 123. first outer annular step; 124. flow guide flat surface; 125. flow guide cambered surface; 126. second outer annular step; 127. second inner annular step; 130. bonnet; 131. third annular step; 132. first inner annular step; 133. fourth annular step; 140. annular baffle; 150. sealing member; 160. limit ring; 170. third channel;
200. valve needle assembly; 210. large valve needle; 211. first connection section; 212. transition section; 213. second connection section; 220. small valve needle; 221. first shaft section; 222. second shaft section; 223. third shaft section; 224. flow rate regulation surface; 230. sealing gasket; 231. sealing surface; 232. cylindrical surface; 240. mounting recess; 250. first channel;
300. sealing structure; 310. sealing circle; 320. sealing ring; 321. protrusion portion; 322. fitting surface; 323. first conical surface; 324. second conical surface;
400. screw assembly; 410. second channel; 420. screw; 430. bearing; 440. assembly sleeve; 450. bushing; 460. spring;
500. nut assembly; 510. fourth channel;
600. valve tube;
710. mounting seat; and 720. annular sealing gasket.

### Detailed Description of the Embodiments

Technical solutions in embodiments of the present invention will be described below clearly and comprehensively in conjunction with accompanying drawings in the embodiments of the present invention. Apparently, the described embodiments are merely some embodiments rather than all embodiments of the present invention. The following description of at least one exemplary embodiment is merely illustrative in effect, and is in no way intended to limit the present invention, and an application or use of the present invention. Based on the embodiments of the present invention, all other embodiments derived by those of ordinary skill in the art without creative efforts fall within the protection scope of the present invention.

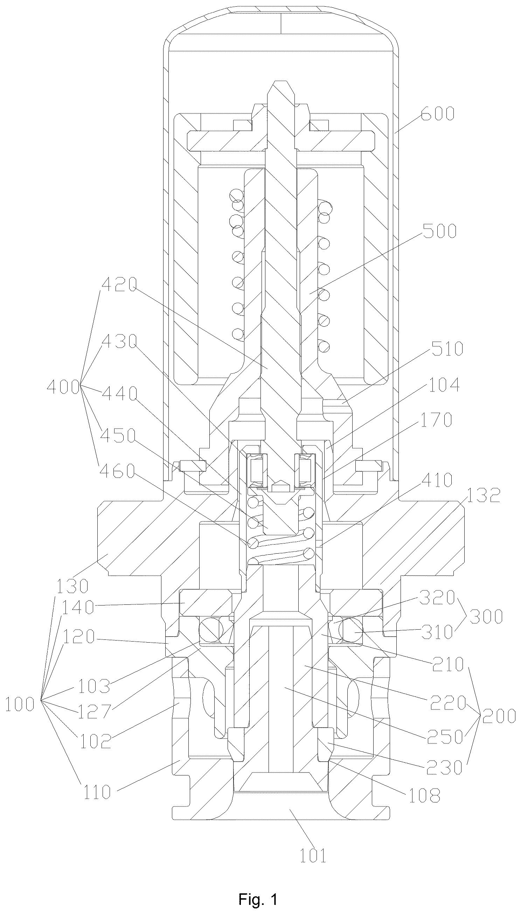

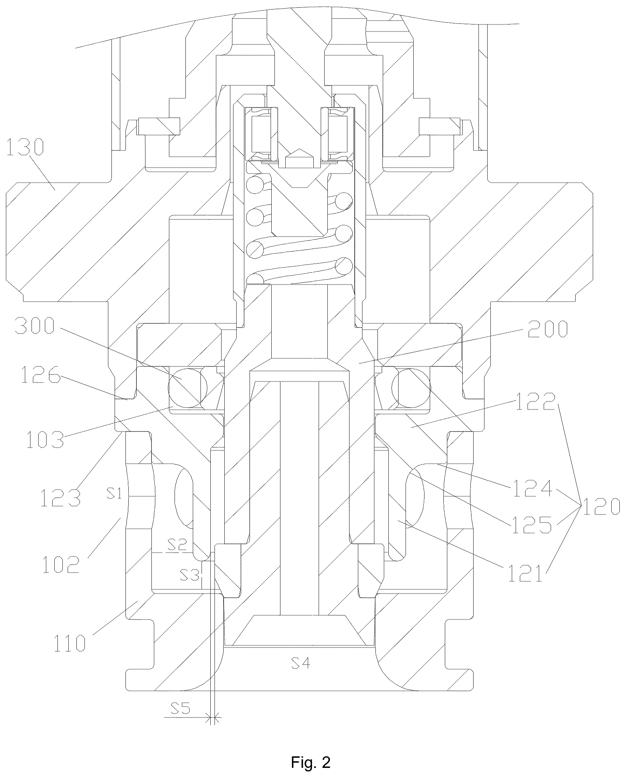

As shown in Fig. 1 to Fig. 6, some embodiments of the present invention provide a valve assembly. The valve assembly includes:
a valve seat assembly 100, where an end of the valve seat assembly 100 is provided with a valve port 101;
a valve needle assembly 200 movably arranged in the valve seat assembly 100, so as to open and close the valve port 101, where an annular sealing portion 108 is formed at a position where the valve needle assembly 200 is in contact with the valve port 101; and a sealing structure 300 located between the valve seat assembly 100 and the valve needle assembly 200. The valve needle assembly 200 is in sealing fit with the valve seat assembly 100 through the sealing structure 300.

An inner wall of the valve seat assembly 100 is provided with an annular recess 103, the sealing structure 300 is located in the annular recess 103, and an inner diameter of the sealing structure 300 is less than a maximum diameter of the annular sealing portion 108. It should be noted herein that the inner diameter of the sealing structure 300 is the inner diameter of the sealing structure 300 compressed and deformed after mounting of the valve assembly is completed, and the inner diameter of the sealing structure 300 is equal to an outer diameter of the valve needle assembly 200 in sealing attaching to the sealing structure 300. In an other structure, an outer wall of the valve needle assembly 200 is provided with an annular recess 103, the sealing structure 300 is located in the annular recess 103, and an outer diameter of the sealing structure 300 is less than a maximum diameter of the annular sealing portion 108. It should be noted herein that the outer diameter of the sealing structure 300 is the outer diameter of the sealing structure 300 compressed and deformed after mounting of the valve assembly is completed, and the outer diameter of the sealing structure 300 is equal to an inner diameter of the valve seat assembly 100 in sealing attaching to the sealing structure 300.

In a case where the valve port 101 is throttled at small opening, high-pressure airflow entering an inlet end of the valve assembly cannot be converted into low-pressure airflow at an outflow end (the valve port 101) within a short time. The high-pressure airflow impacts an end portion of the valve needle assembly 200 when flowing through the valve port 101, and subjects the entire valve needle assembly 200 to dynamic gas force in a direction away from the valve port. In this solution, according to different positions of the annular recess 103, the sealing structure 300 has two different arrangement positions. An inner circle of the sealing structure 300 becomes a sealing ring line in sealing fit with the valve needle assembly 200, or an outer circle of the sealing structure 300 becomes a sealing ring line in sealing fit with the valve seat assembly 100. In either case, a diameter of the sealing ring line is less than the maximum diameter of the annular sealing portion 108 between the valve needle assembly 200 and the valve port 101. Through the arrangement, at a position between the sealing ring line and the annular sealing portion 108, an action force of a fluid in the valve seat assembly 100 on a side surface of the valve needle assembly 200 is towards the valve port 101, that is, the fluid exerts an action force towards the valve port 101 on the valve needle assembly 200. The action force counteracts part of the action force away from the valve port 101 on the end portion of the valve needle assembly 200 exerted by the fluid input from the valve port 101. In this way, the dynamic gas force on the entire valve needle assembly 200 is reduced, and it guarantees that the valve needle assembly can successfully close the valve port.

When the valve needle assembly 200 is in linear contact with the valve port 101, the annular sealing portion 108 is an annular sealing line, and a diameter of the annular sealing line is the maximum diameter. When the valve needle assembly 200 is in surface contact with the valve port 101, the annular sealing portion 108 is an annular sealing surface, and an outer circle of the annular sealing surface is the maximum diameter. In a case where the inner wall of the valve seat assembly 100 is provided with the annular recess 103, the sealing structure 300 includes a sealing circle 310 and a sealing ring 320, the sealing circle 310 is arranged around the sealing ring 320, the valve needle assembly 200 passes through the sealing ring 320, and the sealing circle 310 exerts elastic pre-tightening force towards the valve needle assembly 200 on the sealing ring 320. Compared with adoption of a single O-ring, an interaction force between the sealing ring 320 and the valve needle assembly 200 is large, and a sealing effect is desirable. In addition, through the elastic pre-tightening force, a sealing position is prevented from leaking in a high-temperature environment or after long-term use, and reliability of long-term use is guaranteed.

The valve seat assembly 100 includes a bonnet 130, a protective sleeve 120, and a valve core seat 110 that are connected in sequence, the annular recess 103 is located between the bonnet 130 and the protective sleeve 120, the valve core seat 110 is provided with the valve port 101, and the valve needle assembly 200 passes through the protective sleeve 120. The valve seat assembly 100 is arranged as a split structure, such that a space (that is, the annular recess 103) for accommodating the sealing structure 300 is formed conveniently, and machining difficulty is reduced.

In some embodiments, the valve assembly further includes a screw assembly 400, a nut assembly 500, and a valve tube 600. The screw assembly 400 is in drive connection to an end of the valve needle assembly 200, and the nut assembly 500 and the valve tube 600 are fixedly connected to the valve seat assembly 100. The nut assembly 500 is located in the valve tube 600, and the nut assembly 500 is in threaded connection to the screw assembly 400. The valve assembly further includes a balance channel, and a cavity between the nut assembly 500 and the valve tube 600 communicates with the valve port 101 through the balance channel. The valve port 101 communicates with the cavity between the nut assembly 500 and the valve tube 600 through the balance channel. In this way, pressures of fluids in communicating regions are equal, pressure balance is facilitated, and influence of the pressures of the fluids on the valve port 101 is reduced.

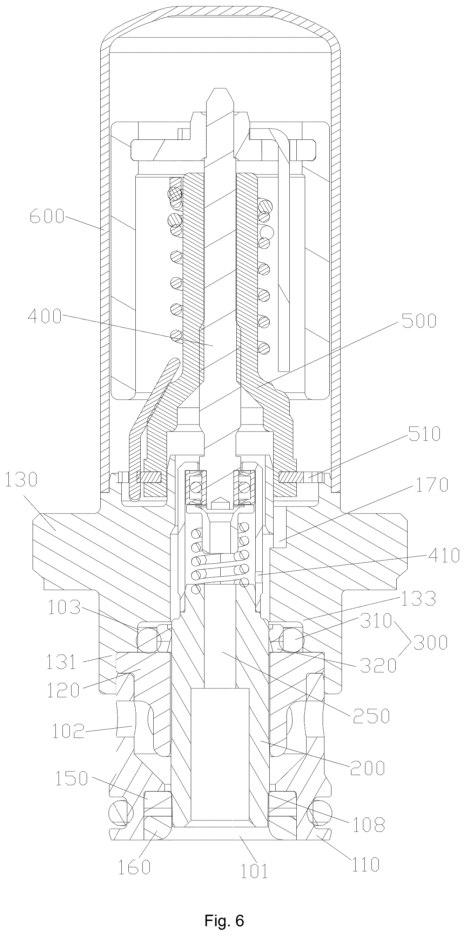

In some embodiments, as shown in Fig. 1 and Fig. 6, the valve needle assembly 200 is provided with a first channel 250 penetrating axially, and the screw assembly 400 is provided with a second channel 410. A third channel 170 is provided in the bonnet 130, or a gap between the bonnet 130 and the screw assembly 400 forms a third channel 170. The nut assembly 500 is provided with a fourth channel 510, and the first channel 250, the second channel 410, the third channel 170, and the fourth channel 510 communicate with each other in sequence to form the balance channel. The valve port 101 communicates with the cavity between the nut assembly 500 and the valve tube 600 through the above-mentioned plurality of channels. A specific position and a shape of each channel are set according to actual demand.

In some embodiments, the screw assembly 400 includes a screw 420, a bearing 430, an assembly sleeve 440, a bushing 450, and a spring 460. The screw 420 is in threaded connection to the nut assembly 500, and the bearing 430, the bushing 450, and the spring 460 are located in the assembly sleeve 440. The bushing 450 abuts against the bearing 430, the spring 460 sleeves the bushing 450 and abuts against the valve needle assembly 200, and the assembly sleeve 440 is fixedly connected to the valve needle assembly. The second channel 410 is arranged on a side wall of the assembly sleeve 440. The bushing 450 is arranged as a closed structure. In this way, the bearing 430 can be blocked, and a life of the bearing 430 can be prevented from being influenced due to entrance of the fluid and impurities into the bearing.

A plurality of circulation holes 102 are distributed in a circumferential direction of the valve core seat 110, and in a case where the valve port 101 is opened, the valve port 101 communicates with the plurality of circulation holes 102. In this way, valve opening and closing of the valve assembly and conveying of the fluid are implemented.

As shown in Fig. 1, the valve needle assembly 200 includes a large valve needle 210, a small valve needle 220, and a sealing gasket 230. The large valve needle 210 is in sealing fit with the valve seat assembly 100 through the sealing structure 300, and the large valve needle 210 is fixedly connected to the small valve needle 220. The sealing gasket 230 is sandwiched between the large valve needle 210 and the small valve needle 220, and the sealing gasket 230 is in sealing fit with the valve port 101. Through the sealing fit of the sealing gasket 230 with the valve port 101, sealing reliability of the valve port 101 is improved. The sealing gasket 230 is made from an elastic material. The valve needle is arranged as a split structure including the large valve needle 210 and the small valve needle 220, thus mounting the sealing gasket 230 conveniently. In some embodiments, an outer diameter of the sealing gasket 230 is greater than an outer diameter of the large valve needle 210 and an outer diameter of the small valve needle 220. In this way, a sealing effect of the valve port 101 can be fully guaranteed.

When the valve assembly is assembled, it is necessary to guarantee that the protective sleeve 120 and the valve core seat 110 are coaxially arranged. During use, the bearing 430 slightly shakes, and the bearing 430 can automatically adjust an axis of the valve needle assembly 200, such that the axis of the valve needle assembly 200 is adjusted to align with an axis of the valve port 101. In addition, when the valve needle assembly 200 deviates from the axis of the valve port 101, the sealing gasket 230 and a throttling section located at a lower end of the small valve needle 220 in the valve port 101 can also adjust the valve needle assembly 200, such that the axis of the valve needle assembly 200 is adjusted to align with the axis of the valve port 101.

In some embodiments, the valve seat assembly 100 includes a valve core seat 110 and a protective sleeve 120. An end portion of the valve core seat 110 is provided with the valve port 101, a side wall of the valve core seat 110 is provided with a circulation hole 102, and the protective sleeve 120 includes a sleeve body 121. The sleeve body 121 is located in a cavity of the valve core seat 110 and is spaced apart from an inner wall of the valve core seat 110, and an outer wall of the sleeve body 121 blocks an opening of the circulation hole 102. The valve needle assembly 200 movably passes through the sleeve body 121, and the valve needle assembly 200 is used for opening and closing the valve port 101.

In this solution, the sleeve body 121 is arranged in the valve core seat 110, and the valve needle assembly 200 passes through the sleeve body 121. Since the outer wall of the sleeve body 121 blocks the opening of the circulation hole 102, that is, the sleeve body 121 blocks a fluid entering from the circulation hole 102, the fluid does not directly impact a side surface of the valve needle assembly 200. Thus, the problem that the fluid impacts the valve needle assembly 200 laterally is avoided, skewing and wear of the valve needle assembly 200 caused by lateral fluid impact are avoided, and the sealing effect of closing of the valve port 101 and reliability of long-term use of the valve needle assembly 200 are guaranteed. The valve core seat 110 may be of an integral structure or a split structure. When the valve core seat 110 is of the split structure, the valve core seat includes a valve port portion and a circulation portion that are connected to each other. The valve port 101 is provided in the valve port portion, the circulation hole 102 is provided in the circulation portion, and the circulation portion is connected to the protective sleeve 120.

The protective sleeve 120 further includes a connector 122. The connector 122 is connected to an end, away from the valve port 101, of the valve core seat 110, and an end, away from the valve port 101, of the sleeve body 121 is connected to the connector 122. The sleeve body 121 is fixed though the connector 122.

In some embodiments, an outer side of the connector 122 is provided with a first outer annular step 123, a side wall of the first outer annular step 123 is in fitting with an inner wall of the valve core seat 110, and a bottom wall of the first outer annular step 123 is in fitting with an end surface of the valve core seat 110. Through the first outer annular step 123, axial positioning and radial limit of the connector 122 and the valve core seat 110 are implemented, and precise fitting of the connector 122 with the valve core seat 110 is guaranteed.

In some embodiments, an end, facing the valve port 101, of the connector 122 is provided with a flow guide flat surface 124, and a joint between the connector 122 and the sleeve body 121 is provided with a flow guide cambered surface 125. The flow guide flat surface 124, the flow guide cambered surface 125, and an outer surface of the sleeve body 121 are connected in sequence, and the circulation hole 102 is located at a side, facing the valve port 101, of the flow guide flat surface 124. With the arrangement, the fluid entering from the circulation hole 102 is guided through the flow guide flat surface 124 and the flow guide cambered surface 125, to change a direction of the fluid and make the fluid flow along the outer surface of the sleeve body 121. In this way, resistance and pressure loss of the fluid are reduced.

In some embodiments, the valve seat assembly 100 further includes a bonnet 130, and a side, away from the valve core seat 110, of the connector 122 is connected to the bonnet 130. The annular recess 103 is provided between the bonnet 130 and the connector 122, or the annular recess 103 is provided in the bonnet 130, or the annular recess 103 is provided in the connector 122. The valve assembly further includes the sealing structure 300, and the sealing structure 300 is located in the annular recess 103 and is in sealing fit with the valve needle assembly 200. Through the bonnet 130, the valve assembly is connected to another structure conveniently. Through the sealing structure 300, sealing between the valve needle assembly 200 and the valve seat assembly 100 is implemented.

The protective sleeve 120 is of an integral structure, and a fitting position between the connector 122 and the bonnet 130 needs to be completely sealed. In some embodiments, the fitting position between the connector 122 and the bonnet 130 is connected through continuous welding. In this way, the sealing effect can be guaranteed, and leakage can be avoided, that is, a fluid located in a space, above the sealing structure 300, of the bonnet 130 is prevented from flowing out through a gap between the connector 122 and the bonnet 130. A fitting position between the connector 122 and the valve core seat 110 is connected through pulse welding or continuous welding. In some embodiments, the protective sleeve 120 may also be arranged as a split structure.

In some embodiments, an end, away from the valve core seat 110, of an outer side of the connector 122 is provided with a second outer annular step 126, a side wall of the second outer annular step 126 is in fitting with an inner wall of the bonnet 130, and a bottom wall of the second outer annular step 126 is in fitting with an end surface of the bonnet 130. The annular recess 103 is provided in the connector 122. Through the second outer annular step 126, axial positioning and radial limit of the connector 122 and the bonnet 130 are implemented, and precise assembly and reliable connection of the protective sleeve 120 and the bonnet 130 are guaranteed.

The sealing ring 320 is provided with a protrusion portion 321, and the protrusion portion 321 is provided with a cylindrical fitting surface 322. The sealing structure 300 is limited in the valve seat assembly 100, the sealing circle 310 is arranged around the sealing ring 320, the valve needle assembly 200 passes through the sealing ring 320, and the fitting surface 322 is in guide sealing fit with the outer wall of the valve needle assembly 200; or the sealing structure 300 is limited in the valve needle assembly 200, the sealing ring 320 is arranged around the sealing circle 310, and the fitting surface 322 is in guide sealing fit with the inner wall of the valve seat assembly 100.

In this solution, the protrusion portion 321 of the sealing ring 320 is in guide sealing fit with the outer wall of the valve needle assembly 200 or the inner wall of the valve seat assembly 100, and the sealing circle 310 exerts the elastic pre-tightening force on the sealing ring 320. Compared with adoption of the single O-ring, interaction force between the sealing ring 320 and the valve needle assembly 200 or the valve seat assembly 100 is large, and a sealing effect is better. In addition, through the elastic pre-tightening force, a sealing position can be prevented from leaking in a high-temperature environment or after long-term use through the elastic pre-tightening force, and reliability of long-term use is guaranteed. In addition, in this solution, the cylindrical fitting surface 322 on the protrusion portion 321 is in sealing fit with the valve needle assembly 200 or the valve seat assembly 100. In this way, a guide role can be further played on the valve needle assembly 200. In addition, an axial size of the fitting surface 322 in this solution is less than an entire axial size of the sealing ring 320. Thus, excessive resistance of valve opening and closing caused by an excessively large contact area between the sealing ring 320 and the valve needle assembly 200 or the valve seat assembly 100 is further avoided, and smooth opening and closing of the valve assembly are guaranteed.

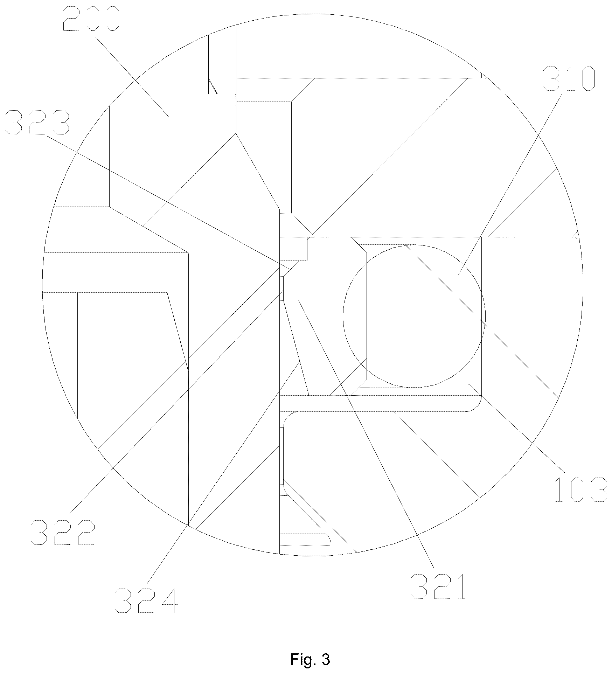

As shown in Fig. 3, the protrusion portion 321 is provided with a first conical surface 323, and an end, having a smaller diameter, of the first conical surface 323 is connected to an end of the fitting surface 322; or the protrusion portion 321 is provided with an annular first cambered surface, and an end, having a smaller diameter, of the first cambered surface is connected to an end of the fitting surface 322. By arranging the first conical surface 323 or the first cambered surface, a guide role can be played during assembly, and the axial size of the fitting surface 322 can be reduced.

The protrusion portion 321 is further provided with a second conical surface 324, and an end, having a smaller diameter, of the second conical surface 324 is connected to an other end of the fitting surface 322; or the protrusion portion 321 is provided with an annular second cambered surface, and an end, having a smaller diameter, of the second cambered surface is connected to an other end of the fitting surface 322. By arranging the second conical surface 324 or the second cambered surface, a guide role can be played during assembly, and the axial size of the fitting surface 322 can be reduced.

In some embodiments, the sealing ring 320 is made of polytetrafluoroethylene. In this way, a high bearing capacity is achieved, and adaption to a high-pressure work environment is achieved. The sealing circle 310 is an O-ring. In this way, elastic force is large, and the elastic pre-tightening force can be exerted on the sealing ring 320. Through the solution, the interaction force between the sealing ring 320 and the valve needle assembly 200 or between the sealing ring 320 and the valve seat assembly 100 is large, and the sealing effect is desirable. In addition, through the elastic pre-tightening force, the sealing position is prevented from leaking in the high-temperature environment or after long-term use, and the reliability of the long-term use is guaranteed.

The valve seat assembly 100 is provided with the annular recess 103, and the sealing structure 300 is located in the annular recess 103. In this way, the sealing structure 300 is limited.

In some embodiments, the valve seat assembly 100 includes a first portion and a second portion, the first portion is fixedly connected to the second portion, the annular recess 103 is located between the first portion and the second portion, and the second portion is provided with the valve port 101. The valve seat assembly 100 is arranged as a split structure, such that the annular recess 103 is formed conveniently, and machining difficulty is reduced.

In some embodiments, the first portion includes a bonnet 130 and an annular baffle 140. The bonnet 130 is provided with a first inner annular step 132, and the annular baffle 140 is fixed in the first inner annular step 132. The annular recess 103 is located between the annular baffle 140 and the second portion, the annular baffle 140 is in limiting fit with the sealing structure 300, the valve needle assembly 200 passes through the annular baffle 140, and the bonnet 130 is fixedly connected to the second portion. The annular baffle 140 is fixed in the first inner annular step 132, thus implementing axial limit of the annular baffle 140 and the first inner annular step. The sealing structure 300 is axially limited by the annular baffle 140, such that the sealing structure 300 is prevented from falling off from the annular recess 103.

As shown in Fig. 1, the second portion includes a protective sleeve 120 and a valve core seat 110. The protective sleeve 120 is provided with a second inner annular step 127, the annular recess 103 is located between the second inner annular step 127 and the first portion, the protective sleeve 120 is fixedly connected to the first portion, and the valve core seat 110 is fixedly connected to the protective sleeve 120. The valve core seat 110 is provided with the valve port 101, a side wall of the valve core seat 110 is provided with a circulation hole 102, and the valve port 101 communicates with the circulation hole 102 when opened. Through the second inner annular step 127, precise positioning and reliable connection of the protective sleeve 120 and the valve core seat 110 are guaranteed. The second portion is arranged as a split structure, such that machining difficulty can be reduced.

In some embodiments, an annular mounting recess 240 is provided between the large valve needle 210 and the small valve needle 220, and the large valve needle 210 and the small valve needle 220 are in axial limiting fit, so as to limit an axial size of the mounting recess 240. The sealing gasket 230 is located in the mounting recess 240, and the sealing gasket 230 is used for opening and closing the valve port 101. In this solution, the large valve needle 210 is connected to the small valve needle 220, and the large valve needle 210 is in axial limiting fit with the small valve needle 220. In this way, an axial size of the mounting recess 240 is precisely limited, an axial size of the sealing gasket 230 mounted in the mounting recess 240 is limited accordingly, excessive compression of the sealing gasket 230 is avoided, and the sealing effect of the sealing gasket 230 on the valve port 101 is guaranteed.

The small valve needle 220 includes a first shaft section 221, a second shaft section 222, and a third shaft section 223 that are connected in sequence, and a diameter of the first shaft section 221, a diameter of the second shaft section 222, and a diameter of the third shaft section 223 are reduced in sequence. The third shaft section 223 is inserted into the large valve needle 210, and an end surface of the second shaft section 222 abuts against an end surface of the large valve needle 210 for axial limit. The mounting recess 240 is defined among the end surface of the large valve needle 210, an end surface of the first shaft section 221, and an outer peripheral surface of the second shaft section 222, and the sealing gasket 230 is sandwiched between the end surface of the large valve needle 210 and the end surface of the first shaft section 221. In this way, the small valve needle 220 is arranged as a stepped structure, and the end surface of the second shaft section 222 abuts against the end surface of the large valve needle 210, thus achieving precise axial positioning between the small valve needle 220 and the large valve needle 210. In this way, the axial size of the mounting recess 240 formed between the small valve needle 220 and the large valve needle 210 is determined, and the sealing gasket 230 is prevented from being excessively compressed during assembly or use.

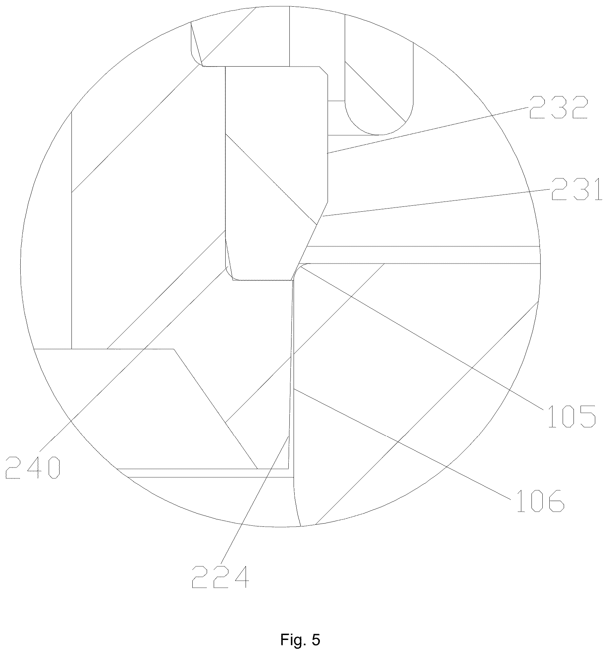

As shown in Fig. 5, an outer wall of the sealing gasket 230 is provided with a sealing surface 231, the sealing surface 231 is obliquely arranged relative to the axis of the valve port 101, and the sealing surface 231 is used for sealing fit with the valve port 101. In this way, after contact with the valve port 101, an area of a contact region is large, and reliability of sealing is guaranteed. The sealing surface 231 may be a slope or a cambered surface.

In some embodiments, the sealing surface 231 is a conical surface, an end portion of the valve port 101 is provided with a cambered surface 105, and the sealing surface 231 is in sealing fit with the cambered surface 105. In this way, after the sealing surface 231 is in contact with the cambered surface 105, the area of the contact region is large, and the reliability of sealing is guaranteed.

The outer wall of the sealing gasket 230 is further provided with a cylindrical surface 232, the cylindrical surface 232 is located at a side, away from the valve port 101, of the sealing surface 231, and an outer diameter of the cylindrical surface 232 is greater than an outer diameter of the large valve needle 210. In this way, an entire radial size of the sealing gasket 230 is large, and the sealing effect is better than a sealing effect of a sealing gasket whose outer diameter is less than the outer diameter of the large valve needle 210.

As shown in Fig. 5, the small valve needle 220 is provided with a first shaft section 221, the first shaft section 221 is inserted into the valve port 101 in a case where the valve port 101 is closed, the first shaft section 221 is provided with a conical flow rate regulation surface 224, and a gap is provided between the flow rate regulation surface 224 and an inner wall of the valve port 101. With the arrangement, during valve opening, a circulation area between the flow rate regulation surface 224 and the inner wall of the valve port 101 gradually changes, thus having a function of flow rate regulation. A specific shape of the first shaft section 221 may be set according to demand for a flow rate curve.

In some embodiments, the inner wall of the valve port 101 is provided with a straight cylindrical surface 106 and a flow guide surface 107. In a case where the valve port 101 is closed, the first shaft section 221 is inserted into a region defined by the straight cylindrical surface 106. The flow guide surface 107 is a conical surface or a cambered surface. The flow guide surface 107 is located at a side, away from the valve needle assembly 200, of the straight cylindrical surface 106, and an end, having a smaller diameter, of the flow guide surface 107 is connected to the straight cylindrical surface 106. By arranging the flow guide surface 107, the fluid is guided, and resistance of the fluid entering the valve port 101 is reduced.

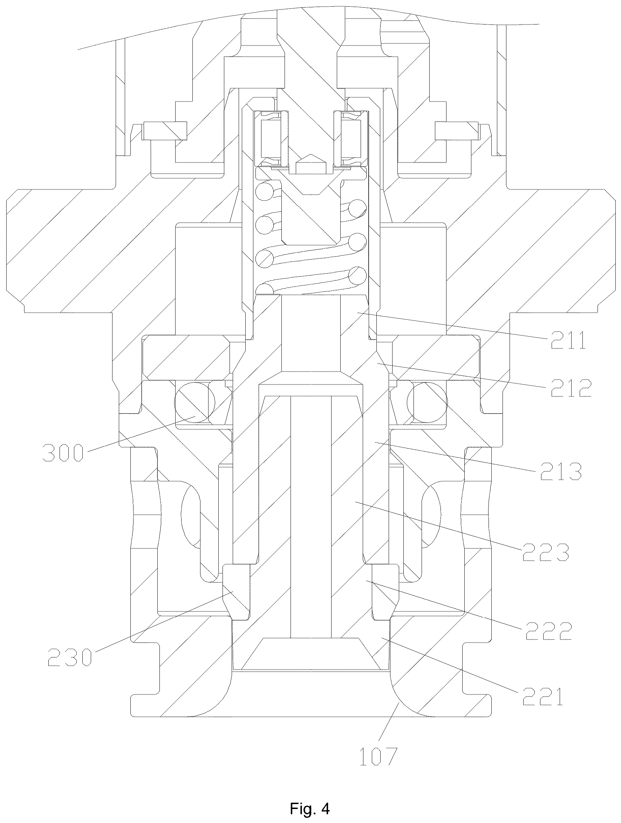

As shown in Fig. 4, the large valve needle 210 includes a first connection section 211, a transition section 212, and a second connection section 213 that are connected in sequence. An outer diameter of the first connection section 211 is less than an outer diameter of the second connection section 213, and an outer peripheral surface of the transition section 212 is a conical surface or a cambered surface. The second connection section 213 and the small valve needle 220 are in inserted connection, and the sealing structure 300 is in sealing fit with the second connection section 213. Since the outer peripheral surface of the transition section 212 is the conical surface or the cambered surface, damage to the sealing structure 300 can be avoided when the large valve needle 210 passes through the sealing structure 300.

As shown in Fig. 6, in another embodiment, an inner side of a bonnet 130 is provided with a third annular step 131, a connector 122 and a valve core seat 110 are inserted into the third annular step 131, an end surface of the connector 122 is in limiting fit with a bottom wall of the third annular step 131, and a side surface of the connector 122 and a side surface of the valve core seat 110 are in limiting fit with a side wall of the third annular step 131. The bonnet 130 is provided with an annular recess 103. This structure can also implement reliable connection among the bonnet 130, the protective sleeve 120, and the valve core seat 110.

As shown in Fig. 6, in another embodiment, a valve seat assembly 100 includes a valve core seat 110, a sealing member 150, and a limit ring 160. The sealing member 150 is provided with the valve port 101, and the sealing member 150 is located in a recess of the valve core seat 110. The limit ring 160 is fixed in the recess of the valve core seat 110, and the limit ring 160 limits a position of the sealing member 150. The sealing member 150 can be fixed through the limit ring 160, so as to prevent the sealing member 150 from falling off from the recess. The limit ring 160 may be connected to an inner wall of the recess through welding or interference. In this embodiment, the valve needle assembly 200 may not be provided with a sealing gasket, the valve needle assembly 200 may adopt an integral structure, and the valve port 101 is sealed through fitting with the sealing member 150.

As shown in Fig. 6, in another embodiment, the first portion is provided with a third annular step 131 and a fourth annular step 133 that are arranged as steps, the third annular step 131 is closest to the valve port 101 relative to the fourth annular step 133, the second portion extends into the third annular step 131 and is fixedly connected to the third annular step 131, and the annular recess 103 is located between an end surface of the second portion and the fourth annular step 133. With such arrangement, reliable connection between the first portion and the second portion and limit of the sealing structure 300 can also be achieved.

In some embodiments, a plurality of circulation holes 102 are provided. A sum of circulation areas of all the plurality of circulation holes 102 is S1, a circulation area between an outer peripheral surface of the sleeve body 121 and an inner peripheral surface of the valve core seat 110 is S2, a circulation area between an end, facing the valve port 101, of the sleeve body 121 and a surface where the valve port 101 is located is S3, a circulation area of the valve port 101 is S4, and S1≥S4,S2≥S4,S3≥S4. With the arrangement, the circulation areas of all the plurality of circulation holes 102, the circulation area between the outer peripheral surface of the sleeve body 121 and the inner peripheral surface of the valve core seat 110, and the circulation area between the end, facing the valve port 101, of the sleeve body 121 and the surface where the valve port 101 is located are all greater than the circulation area of the valve port 101 of S4. Thus, the fluid can be prevented from being throttled before the valve port 101.

In addition, a circulation area between an inner peripheral surface of the sleeve body 121 and an outer peripheral surface of the valve needle assembly 200 is S5, and S5>0. In this way, during upward movement of the valve needle assembly 200, a space between the inner peripheral surface of the sleeve body 121 and the outer peripheral surface of the valve needle assembly 200 serves as an drain outlet of the fluid between the valve needle assembly 200 and the protective sleeve 120.

In this solution, the connector 122 of the protective sleeve 120 may guide the valve needle assembly 200 or not. A lowest end of the sleeve body 121 of the protective sleeve 120 is lower than a position of the circulation hole 102. As long as the lowest end of the sleeve body 121 is lower than the position of the circulation hole 102, the fluid flowing in from the circulation hole 102 is prevented from causing great impact on the valve needle assembly 200. In this solution, the connector 122 of the protective sleeve 120 does not perform guide, that is, a particular gap exists between the valve needle assembly 200 and the connector 122. The gap can be used as a reserved size for mounting the sealing structure 300, and can also guarantee that the protective sleeve 120 does not scratch an outer sealing surface of the valve needle assembly 200 when the valve needle assembly 200 slightly deviates from the axis of the valve port.

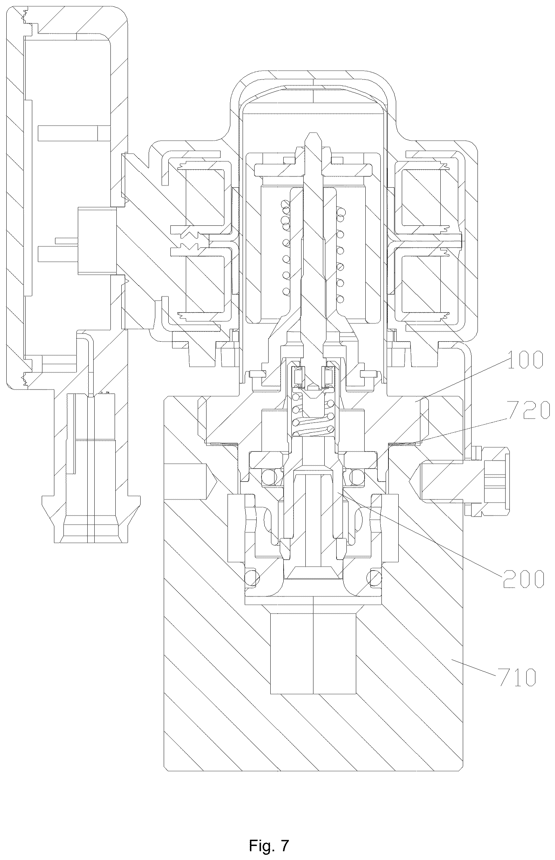

As shown in Fig. 7, the present invention further provides an electronic expansion valve. The electronic expansion includes a mounting seat 710 and the valve assembly described above. A portion of the valve seat assembly 100 of the valve assembly extends into the mounting seat 710 and is fixedly connected to the mounting seat 710. The electronic expansion valve is applied to a use environment such as a vehicle.

In some embodiments, an outer wall of the valve seat assembly 100 is in threaded connection to an inner wall of the mounting seat 710, and step structures in mutual limiting fit are arranged between the mounting seat 710 and the valve seat assembly 100. The electronic expansion valve further includes an annular sealing gasket 720, and the annular sealing gasket 720 is sandwiched between the step structures between the mounting seat 710 and the valve seat assembly 100. The annular sealing gasket 720 is axially elastically deformable. In this way, the annular sealing gasket 720 can reliably seal the step structures in mutual limiting fit between the mounting seat 710 and the valve seat assembly 100, leakage is avoided, sealing is implemented during tightening of mating threads, and assembly is simple and convenient.

The embodiments described above are merely some embodiments of the present invention, and are not intended to limit the present invention, and for those skilled in the art, various modifications and changes can be made to the present invention. Any modification, equivalent substitution, improvement, etc. made within the spirit and principles of the present invention shall fall within the protection scope of the present invention.

## Claims

1. A valve assembly, comprising:
a valve seat assembly (100), wherein an end of the valve seat assembly (100) is provided with a valve port (101);
a valve needle assembly (200) movably arranged in the valve seat assembly (100), so as to open and close the valve port (101), wherein an annular sealing portion (108) is formed at a position where the valve needle assembly (200) is in contact with the valve port (101); and
a sealing structure (300) located between the valve seat assembly (100) and the valve needle assembly (200), wherein the valve needle assembly (200) is in sealing fit with the valve seat assembly (100) through the sealing structure (300); and
an inner wall of the valve seat assembly (100) is provided with an annular recess (103), the sealing structure (300) is located in the annular recess (103), and an inner diameter of the sealing structure (300) is less than a maximum diameter of the annular sealing portion (108); or an outer wall of the valve needle assembly (200) is provided with an annular recess (103), the sealing structure (300) is located in the annular recess (103), and an outer diameter of the sealing structure (300) is less than a maximum diameter of the annular sealing portion (108).

2. The valve assembly according to claim 1, wherein
in a case where the inner wall of the valve seat assembly (100) is provided with the annular recess (103), the sealing structure (300) comprises a sealing circle (310) and a sealing ring (320), the sealing circle (310) is arranged around the sealing ring (320), the valve needle assembly (200) passes through the sealing ring (320), and the sealing circle (310) exerts elastic pre-tightening force towards the valve needle assembly (200) on the sealing ring (320); and
in a case where the inner wall of the valve seat assembly (100) is provided with the annular recess (103), the valve seat assembly (100) comprises a bonnet (130), a protective sleeve (120), and a valve core seat (110) that are connected in sequence, the annular recess (103) is located between the bonnet (130) and the protective sleeve (120), the valve core seat (110) is provided with the valve port (101), and the valve needle assembly (200) passes through the protective sleeve (120).

3. The valve assembly according to claim 2, further comprising a screw assembly (400), a nut assembly (500), and a valve tube (600), wherein the screw assembly (400) is in drive connection to an end of the valve needle assembly (200), and the nut assembly (500) and the valve tube (600) are fixedly connected to the valve seat assembly (100); the nut assembly (500) is located in the valve tube (600), and the nut assembly (500) is in threaded connection to the screw assembly (400); and the valve assembly further comprises a balance channel, and a cavity between the nut assembly (500) and the valve tube (600) communicates with the valve port (101) through the balance channel.

4. The valve assembly according to claim 3, wherein the valve needle assembly (200) is provided with a first channel (250) penetrating axially, and the screw assembly (400) is provided with a second channel (410); a third channel (170) is provided in the bonnet (130), or a gap between the bonnet (130) and the screw assembly (400) forms a third channel (170); and the nut assembly (500) is provided with a fourth channel (510), and the first channel (250), the second channel (410), the third channel (170), and the fourth channel (510) communicate with each other in sequence to form the balance channel.

5. The valve assembly according to claim 1, wherein the valve needle assembly (200) comprises a large valve needle (210), a small valve needle (220), and a sealing gasket (230); the large valve needle (210) is in sealing fit with the valve seat assembly (100) through the sealing structure (300), and the large valve needle (210) is fixedly connected to the small valve needle (220); and the sealing gasket (230) is sandwiched between the large valve needle (210) and the small valve needle (220), and the sealing gasket (230) is in sealing fit with the valve port (101).

6. The valve assembly according to claim 1, wherein the valve seat assembly (100) comprises a valve core seat (110), a sealing member (150), and a limit ring (160); the sealing member (150) is provided with the valve port (101), and the sealing member (150) is located in a recess of the valve core seat (110); and the limit ring (160) is fixed in the recess of the valve core seat (110), and the limit ring (160) limits a position of the sealing member (150).

7. The valve assembly according to claim 1, wherein the valve seat assembly (100) comprises a valve core seat (110) and a protective sleeve (120); an end portion of the valve core seat (110) is provided with the valve port (101), a side wall of the valve core seat (110) is provided with a circulation hole (102), and the protective sleeve (120) comprises a sleeve body (121); and the sleeve body (121) is located in a cavity of the valve core seat (110) and is spaced apart from an inner wall of the valve core seat (110), and an outer wall of the sleeve body (121) blocks an opening of the circulation hole (102).

8. The valve assembly according to claim 7, wherein the protective sleeve (120) further comprises a connector (122), the connector (122) is connected to the valve core seat (110), and the sleeve body (121) is connected to the connector (122).

9. The valve assembly according to claim 8, wherein the valve seat assembly (100) further comprises a bonnet (130), and the connector (122) is connected to the bonnet (130); the annular recess (103) is provided between the bonnet (130) and the connector (122), or the annular recess (103) is provided in the bonnet (130), or the annular recess (103) is provided in the connector (122); and the valve assembly further comprises the sealing structure (300), and the sealing structure (300) is located in the annular recess (103) and is in sealing fit with the valve needle assembly (200).

10. The valve assembly according to claim 9, wherein an end, away from the valve core seat (110), of an outer side of the connector (122) is provided with a second outer annular step (126), a side wall of the second outer annular step (126) is in fitting with an inner wall of the bonnet (130), and a bottom wall of the second outer annular step (126) is in fitting with an end surface of the bonnet (130).

11. The valve assembly according to claim 9, wherein an inner side of the bonnet (130) is provided with a third annular step (131), both the connector (122) and the valve core seat (110) are inserted into the third annular step (131), an end surface of the connector (122) is in limiting fit with a bottom wall of the third annular step (131), and a side surface of the connector (122) and a side surface of the valve core seat (110) are in limiting fit with a side wall of the third annular step (131).

12. The valve assembly according to claim 7, wherein a plurality of circulation holes (102) are provided; a sum of circulation areas of all the plurality of circulation holes (102) is S1, a circulation area between an outer peripheral surface of the sleeve body (121) and an inner peripheral surface of the valve core seat (110) is S2, a circulation area between an end, facing the valve port (101), of the sleeve body (121) and a surface where the valve port (101) is located is S3, a circulation area of the valve port (101) is S4, and S1≥S4,S2≥S4,S3≥S4; and a circulation area between an inner peripheral surface of the sleeve body (121) and an outer peripheral surface of the valve needle assembly (200) is S5, and S5>0.

13. The valve assembly according to claim 1, wherein the sealing structure (300) comprises a sealing circle (310) and a sealing ring (320), the sealing ring (320) is provided with a protrusion portion (321), and the protrusion portion (321) is provided with a cylindrical fitting surface (322); wherein the sealing structure (300) is limited in the valve seat assembly (100), the sealing circle (310) is arranged around the sealing ring (320), the valve needle assembly (200) passes through the sealing ring (320), and the fitting surface (322) is in guide sealing fit with the outer wall of the valve needle assembly (200); or the sealing structure (300) is limited in the valve needle assembly (200), the sealing ring (320) is arranged around the sealing circle (310), and the fitting surface (322) is in guide sealing fit with the inner wall of the valve seat assembly (100).

14. The valve assembly according to claim 13, wherein the protrusion portion (321) is provided with a first conical surface (323), and an end, having a smaller diameter, of the first conical surface (323) is connected to an end of the fitting surface (322); or the protrusion portion (321) is provided with an annular first cambered surface, and an end, having a smaller diameter, of the first cambered surface is connected to an end of the fitting surface (322).

15. The valve assembly according to claim 14, wherein the protrusion portion (321) is provided with a second conical surface (324), and an end, having a smaller diameter, of the second conical surface (324) is connected to an other end of the fitting surface (322); or the protrusion portion (321) is provided with an annular second cambered surface, and an end, having a smaller diameter, of the second cambered surface is connected to an other end of the fitting surface (322).

16. The valve assembly according to claim 1, wherein the valve needle assembly (200) comprises a large valve needle (210), a small valve needle (220), and a sealing gasket (230); the large valve needle (210) is connected to the small valve needle (220), an annular mounting recess (240) is provided between the large valve needle (210) and the small valve needle (220), and the large valve needle (210) and the small valve needle (220) are in axial limiting fit, so as to limit an axial size of the mounting recess (240); and the sealing gasket (230) is located in the mounting recess (240), and the sealing gasket (230) is used for opening and closing the valve port (101).

17. The valve assembly according to claim 16, wherein the small valve needle (220) comprises a first shaft section (221), a second shaft section (222), and a third shaft section (223) that are connected in sequence, and a diameter of the first shaft section (221), a diameter of the second shaft section (222), and a diameter of the third shaft section (223) are reduced in sequence; the third shaft section (223) is inserted into the large valve needle (210), and an end surface of the second shaft section (222) abuts against an end surface of the large valve needle (210) for axial limit; and the mounting recess (240) is defined among the end surface of the large valve needle (210), an end surface of the first shaft section (221), and an outer peripheral surface of the second shaft section (222), and the sealing gasket (230) is sandwiched between the end surface of the large valve needle (210) and the end surface of the first shaft section (221).

18. The valve assembly according to claim 16, wherein the small valve needle (220) is provided with a first shaft section (221), the first shaft section (221) is inserted into the valve port (101) in a case where the valve port (101) is closed, the first shaft section (221) is provided with a conical flow rate regulation surface (224), and a gap is provided between the flow rate regulation surface (224) and an inner wall of the valve port (101).

19. The valve assembly according to claim 16, wherein the sealing structure (300) is limited in the valve seat assembly (100) and is in sealing fit with the large valve needle (210), and the large valve needle (210) comprises a first connection section (211), a transition section (212), and a second connection section (213) that are connected in sequence; an outer diameter of the first connection section (211) is less than an outer diameter of the second connection section (213), and an outer peripheral surface of the transition section (212) is a conical surface or a cambered surface; and the second connection section (213) and the small valve needle (220) are in inserted connection, and the sealing structure (300) is in sealing fit with the second connection section (213).

20. An electronic expansion valve, comprising a mounting seat (710) and the valve assembly according to any one of claims 1 to 19, wherein a portion of the valve seat assembly (100) of the valve assembly extends into the mounting seat (710) and is fixedly connected to the mounting seat (710), the electronic expansion valve further comprises an annular sealing gasket (720), and the annular sealing gasket (720) is sandwiched between step structures between the mounting seat (710) and the valve seat assembly (100).
